# EUROPEAN PATENT APPLICATION

(11) **EP 4 191 700 A1**
(43) Date of publication of application: **07.06.2023**
(21) Application number: 22739595.1
(22) Date of filing: 10.01.2022
(51) Int. Cl.: H01M 4/13, H01M 4/139, H01M 4/04, H01M 4/62, H01M 10/052, H01M 4/02

(54) **FREESTANDING FILM, ELECTRODE FOR SECONDARY BATTERY, SECONDARY BATTERY COMPRISING SAME, AND METHOD FOR MANUFACTURING ELECTRODE**

(30) Priority: 12.01.2021 KR 20210004143; 06.01.2022 KR 20220002294
(71) Applicant: LG Energy Solution, Ltd., Seoul 07335 (KR)
(72) Inventor: KIM, Myeongsoo, Daejeon 34122 (KR); KIM, Jeonggil, Daejeon 34122 (KR); KIM, Taegon, Daejeon 34122 (KR)
(74) Representative: Goddar, Heinz J.
(86) International application number: PCT/KR2022/000359
(87) International publication number: WO 2022/154399

(57) **Abstract**

The freestanding film according to one embodiment of the present disclosure includes a pattern having directionality on at least one surface.

## Description

### [TECHNICAL FIELD]

### Cross Citation with Related Application(s)

This application claims the benefit of Korean Patent Application No. 10-2021-0004143 filed on January 12, 2021 and Korean Patent Application No. 10-2022-0002294 filed on January 6, 2022 in the Korean Intellectual Property Office, the contents of which are incorporated herein by reference in their entirety.

The present disclosure relates to a freestanding film, an electrode for secondary battery, a secondary battery including the same, and a method of manufacturing the electrode, and more particularly to a freestanding film having improved peel strength and adhesive force, an electrode for secondary battery, a secondary battery including the same, and a method of manufacturing the electrode.

### [BACKGROUND]

Along with the technology development and increased demand for mobile devices, demand for secondary batteries as energy sources has been increasing rapidly. Among these secondary batteries, a lithium secondary battery having high energy density and a high voltage, a long cycle lifespan, and a low self-discharge rate is commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density and discharge voltage is actively being conducted, a part of which are in the commercialization stage.

Conventional electrodes for secondary batteries have generally been manufactured in a wet manner. However, when the electrode is manufactured in a wet manner, a heat treatment process at a high temperature is essentially required, and there is a risk that the metal oxide may be damaged. Therefore, there is a growing need to develop an electrode manufactured in a dry manner.

### [DETAILED DESCRIPTION OF THE INVENTION]

### [Technical Problem]

It is an object of the present disclosure to provide a freestanding film having improved peel strength and adhesive force, an electrode for secondary battery, a secondary battery including the same, and a method of manufacturing the electrode.

The objects of the present disclosure are not limited to the aforementioned objects, and other objects which are not described herein should be clearly understood by those skilled in the art from the following detailed description and the accompanying drawings.

### [Technical Solution]

According to one aspect of the present disclosure, there is provided a freestanding film comprising a pattern having directionality on at least one surface.

The pattern may be a concave-convex pattern.

The pattern may have an interval of 100 *µ*m to 2000 *µ*m.

The pattern may have a depth of 1.5 *µ*m to 35 *µ*m.

According to another aspect of the present disclosure, there is provided an electrode for secondary battery comprising: an electrode current collector; and an electrode layer located on the electrode current collector, wherein the electrode layer may include an electrode composition in which an active material, a conductive material, and a binder are dry-mixed, wherein the electrode composition may be prepared into a freestanding film, and wherein the freestanding film may include a pattern having directionality on at least one surface.

The pattern may be a concave-convex pattern.

The pattern may have an interval of 100 *µ*m to 2000 *µ*m.

The pattern may have a depth of 1.5 *µ*m to 35 *µ*m.

The freestanding film may be attached to the electrode current collector so that one surface on which the pattern is formed is in contact with the electrode current collector.

The active material may include at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound, Fe₂(MoO₄)₃, and lithium manganese oxide (LMO).

The binder may include polytetrafluoroethylene (PTFE).

The freestanding film may have a peel strength of 10 gf/20 mm or more and 15 gf/20 mm or less.

According to yet another aspect of the present disclosure, there is provided a method of manufacturing an electrode for secondary battery, the method comprising the steps of: dry-mixing an active material, a conductive material, and a binder to prepare a mixture; applying a shear force to the mixture to produce a freestanding film; forming a pattern having directionality at regular intervals on the freestanding film; and attaching the freestanding film onto an electrode current collector to form an electrode for a secondary battery.

The pattern may be a concave-convex pattern.

The pattern may have an interval of 100 *µ*m to 2000 *µ*m.

The pattern may have a depth of 1.5 *µ*m to 35 *µ*m.

The freestanding film may be attached to the electrode current collector so that one surface on which the pattern is formed is in contact with the electrode current collector.

The step of forming the pattern may include any of a step of forming the pattern on the freestanding film by an embossing pattern formed on a roll for winding the freestanding film, a step of adjusting the speed of the roll, and a step of setting a gear ratio of the 2 roll mill differently.

The step of setting the gear ratio of the two roll mill differently may include a step of setting the gear ratio differently to generate a backlash.

The binder may include polytetrafluoroethylene (PTFE).

According to yet another aspect of the present disclosure, there is provided a secondary battery comprising the above-mentioned freestanding film.

### [Advantageous Effects]

According to embodiments of the present disclosure, an electrode for a secondary battery can be manufactured by a dry method comprising the step of forming a pattern on a freestanding film, thereby improving the peel strength and adhesive force.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 schematically shows a pattern of a freestanding film according to an embodiment of the present disclosure;
Fig. 2 is a cross-sectional view of a pattern of a freestanding film according to an embodiment of the present disclosure;
Fig. 3 is a flowchart showing a method for manufacturing an electrode for a secondary battery according to another embodiment of the present disclosure;
Fig. 4 is a graph for comparing a peel strength according to the pattern formed on the freestanding film included in the electrode for secondary battery, in Example and Comparative Example of the present disclosure;
Fig. 5 is a graph for comparing a peel strength according to the interval of the patterns formed on the freestanding film included in the electrode for secondary battery, in Example and Comparative Example of the present disclosure; and
Fig. 6 is a graph for comparing peel strength according to the depth of the patterns formed on the free-standing film included in the electrode for secondary battery, in Example and Comparative Example of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Now, an electrode for secondary battery according to an embodiment of the present disclosure will be described.

An electrode for secondary battery according to an embodiment of the present disclosure includes an electrode current collector; and an electrode layer formed of freestanding film located on the electrode current collector. The electrode layer includes an electrode composition in which an active material, a conductive material, and a binder are dry-mixed.

The electrode layer may be formed in the process of manufacturing a freestanding film, and the electrode layer may be attached onto the electrode current collector by a lamination process. Here, the electrode layer may have a pattern having directionality. The pattern according to the present embodiment may have an interval of about 100 *µ*m to 2000 *µ*m. Further, the pattern according to the present embodiment may have a depth of about 1.5 *µ*m to about 35 *µ*m. At this time, the interval of the pattern can be defined as the distance between the adjacent grooves, and the depth of the pattern can be defined as the depth at which the groove is recessed. The pattern may be formed on one surface of the electrode layer attached to the electrode current collector.

Thereby, when the electrode layer is attached to the electrode current collector, it can have high adhesive force, and the electrode layer may have a peel strength of 10 gf/20 mm or more and 15 gf/20 mm or less from the electrode current collector. Further, by achieving the effect of improving the adhesive force by the pattern, the use of the existing binder can be minimized.

When the pattern interval of the electrode layer according to the present embodiment is too small, a crack can occur in the electrode for a secondary battery and can be cut without maintaining the strength higher than the prescribed level. Further, if the pattern interval of the electrode layer is too large, it is substantially the same as the one in which the pattern does not exist, and thus the effect of improving the adhesive force due to the formation of the pattern may not be obtained, or the above effect may be reduced.

Further, if the depth of the pattern of the electrode layer is too deep, a crack may occur in the electrode for secondary battery, and a phenomenon in which the electrode for secondary battery breaks may occur. Further, if the patten depth of the electrode layer is too shallow, it is substantially the same as the one in which the pattern does not exist, and thus the effect of improving an adhesive force due to the formation of the pattern may not be obtained, or the effect may be reduced.

Next, each component included in the electrode for secondary battery according to an embodiment of the present disclosure will be described in detail.

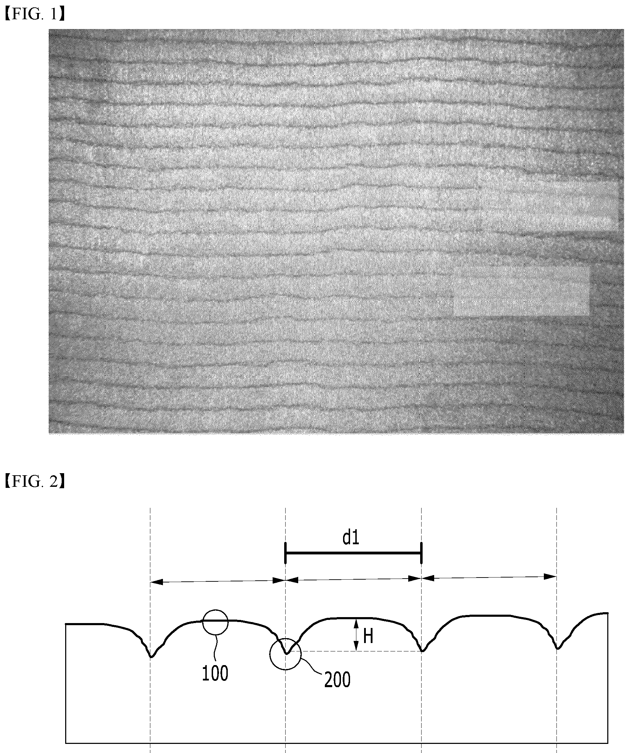

Fig. 1 schematically shows a pattern of a freestanding film according to an embodiment of the present disclosure. Fig. 2 is a cross-sectional view of a pattern of a freestanding film according to an embodiment of the present disclosure.

Referring to Figs. 1 and 2, the electrode layer included in the electrode for secondary battery according to the present embodiment includes an electrode composition in which an active material, a conductive material, and a binder are dry-mixed, wherein the electrode composition is prepared into a freestanding film. At this time, the freestanding film included in the electrode for a secondary battery according to the present embodiment includes a pattern having directionality on at least one surface. In particular, the pattern having the directionality may include a plurality of patterns formed in one direction, as shown in Fig. 1, wherein the pattern having the directionality may be is a concave-convex pattern.

More specifically, in the electrode layer included in the electrode for a secondary battery according to the present embodiment, the pattern includes a plurality of convex parts 100 and groove parts 200 that are alternately formed and located on the freestanding film. Here, the plurality of convex parts 100 may be formed so that their heights are constant, respectively, and the plurality of groove parts 200 may also be formed so that their recessed depths are constant, respectively, without being limited thereto. At this time, the interval between the adjacent groove parts 200 may be defined as the interval d1 of the pattern. When the interval (d1) of the pattern is outside a certain range, the effect to be achieved by the embodiments of the present disclosure may not be achieved or the effect may be reduced.

At this time, the pattern having the directionality may include a direction in which the groove 200 is formed to be elongated (horizontal direction in Fig. 1) and a direction (vertical direction in Fig. 1) in which the interval d1 of the pattern is formed. That is, the directionality of the pattern having the directionality may mean a direction in which the groove part 200 is formed to be elongated. As will be described later, the pattern may be formed while a two-roll mill passes through the freestanding film, and the direction in which the groove part 200 of the pattern is formed may be formed in a direction perpendicular to the direction in which the freestanding film passes through a two-roll mill. Thereby, the directionality of the pattern having the directionality may be a direction perpendicular to a direction in which the freestanding film passes through a two-roll mill. Therefore, the direction in which the interval d1 of the pattern is formed may coincide with the direction in which the freestanding film passes through a two-roll mill.

The pattern serves to improve the adhesive force between the freestanding film and the electrode layer and the electrode current collector.

The interval d1 of the pattern may be 100 *µ*m or more and 2000 *µ*m or less. More preferably, the interval d1 of the pattern may be 150 *µ*m or more and 1900 *µ*m or less. As an example, the interval d1 of the pattern may be 200 *µ*m or more and 1800 *µ*m or less.

Thereby, in the electrode for a secondary battery according to the present embodiment, the interval d1 of the pattern is included in the above-mentioned range, so that the adhesive force between the freestanding film and the electrode current collector can be improved by the pattern, and the peel strength of the freestanding film can be improved. In addition, by forming the pattern on the freestanding film, the use of binder can be minimized.

On the other hand, when the interval d1 of the pattern is outside the above range, the effect of improving the adhesive force by the pattern can be reduced, and the peel strength can be reduced. More specifically, when the interval d1 of the pattern is less than 100 *µ*m, a crack occurs in the electrode for secondary battery due to the excessive pattern formation on the freestanding film, and the strength of the electrode can be weakened. Further, the weakened strength may increase the possibility of cutting the secondary battery electrode. On the other hand, when the interval d1 of the pattern exceeds 2000 *µ*m, this may be the same as the case in which the pattern is not formed, so that it may not have an effect of improving an adhesive force, or the effect may be reduced.

Further, the depth H of the pattern may be defined as a depth at which the groove part 200 is recessed from the convex part 100 or a height at which the convex part 100 protrudes from the groove part 200.

At this time, the depth (H) of the pattern may be 1.5 *µ*m or more and 35 *µ*m or less. More preferably, the depth (H) of the pattern may be 1.8 *µ*m or more and 32 *µ*m or less. As an example, the depth H of the pattern may be 2 *µ*m or more and 30 *µ*m or less.

Thereby, in the electrode for secondary battery according to the present embodiment, the depth (H) of the pattern is included in the above-mentioned range, so that the adhesive force between the freestanding film and the electrode current collector can be improved by the pattern, and the peel strength of the freestanding film can be improved. In addition, by forming the pattern on the freestanding film, the use of the binder can be minimized.

On the other hand, when the depth (H) of the pattern is outside the above range, the effect of improving the adhesive force by the pattern may be reduced, and the peel strength may be reduced. More specifically, when the depth (H) of the pattern exceeds 35 *µ*m, due to the excessive pattern formation on the freestanding film, a crack may occur in the electrode for secondary battery, and the strength of the electrode may be weakened. In addition, the possibility of cutting the secondary battery electrode may increase due to the weakened strength. On the other hand, when the depth (H) of the pattern is less than 1.5 *µ*m, this may be the same as the case in which the pattern is not formed, the effect of improving adhesion may not be exhibited, or the effect may be reduced.

In order to form a pattern according to the present embodiment, an embossing pattern is formed on the roller that winds the freestanding film, so that the pattern of the roller can be transferred to the surface of the freestanding film. Alternatively, by adjusting the speed of the roller winding the freestanding film, a pattern can be formed on the surface of the freestanding film. Alternatively, the two-roll mill may pass through the freestanding film while having different gear ratios from each other, a pattern can be formed on the surface of the freestanding film. When using the two-roll mill, a gear ratio is set differently, so that a backlash can occur due to the difference in the gear ratio. When the gear is connected so as to rotate in both directions on one axis of the two roll mill, the backlash means a gap generated at the moment when a driving roll rotates but a dependent roll stops. At this time, a shearing force can be generated to form a pattern on the freestanding film. Further, the pattern interval d1 and the pattern depth H may be adjusted according to the size of the backlash.

The active material may be a positive electrode active material. The active material may include, for example, lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound, Fe₂(MoO₄)₃, and the like.

As an example, the active material may include lithium manganese oxide (LMO). Here, the active material may be contained in an amount of 85% by weight to 99% by weight based on the total weight of the electrode composition. More preferably, the active material may be contained in an amount of 87% by weight to 98% by weight based on the total weight of the electrode composition. As an example, the active material may be contained in an amount of 89% by weight to 97% by weight based on the total weight of the electrode composition.

The binder performs the role of improving adhesion between active material particles and an adhesive force between the active material and the current collector. Specific examples thereof include polytetrafluoroethylene (PTFE), polyvinylidene fluoride (PVDF), vinylidenefluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof, and these may be used either singly or as a mixture of two or more.

In one example, the binder may include polytetrafluoroethylene (PTFE). Here, the content of the binder may be 1% by weight or more and 5% by weight or less based on the total weight of the electrode composition. More preferably, the content of the binder may be 1.5% by weight or more and 4.5% by weight or less based on the total weight of the electrode composition. As an example, the content of the binder may be 2% by weight or more and 4% by weight or less based on the total weight of the electrode composition.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and these may be used either singly or as a mixture of two or more. Here, the conductive material may be contained in an amount of 1% by weight to 10% by weight based on the total weight of the electrode. More preferably, the content of the conductive material may be 1% by weight or more and 5% by weight or less based on the total weight of the electrode composition. As an example, the content of the conductive material may be 2% by weight or more and 4% by weight or less based on the total weight of the electrode composition.

The above-mentioned electrode for secondary battery may be included as a positive electrode in a secondary battery according to another embodiment of the present disclosure. More specifically, the secondary battery according to another embodiment of the present disclosure may include an electrode assembly including a positive electrode, a negative electrode, and a separator interposed between the positive electrode and the negative electrode, and an electrolyte.

The negative electrode can be manufactured by applying a negative electrode composition including a negative electrode active material, a polymer material, a conductive material and the like to the negative electrode current collector, similarly to the electrode for secondary battery.

The negative electrode can also be manufactured in a form in which the negative electrode composition including the negative electrode active material is attached or applied onto the negative electrode current collector, and the negative electrode composition may also further include the conductive material and polymer material as described above, together with the negative electrode active material.

A negative electrode active material for a lithium secondary battery, which is common in the art, can be used as the negative electrode active material. In one example, a material such as lithium metal, lithium alloy, petroleum coke, activated carbon, graphite, silicon, tin, metal oxide or other carbons may be used.

The negative electrode current collector is not particularly limited as long as it has high conductivity without causing chemical changes to the battery. For example, copper, stainless steel, aluminum, nickel, titanium, calcined carbon, copper or stainless steel having a surface treated with carbon, nickel, titanium, silver, etc., aluminum-cadmium alloy, and the like can be used.

The separator separates the negative electrode and the positive electrode, and provides a passage for lithium ions to move. Any separator may be used without particular limitation as long as it is generally used as a separator in a lithium secondary battery. Particularly, a separator having excellent moisture-retention ability for an electrolyte solution while having low resistance to the migration of electrolyte ions is preferable.

In addition, the electrolyte solution used herein may include an organic liquid electrolyte, an inorganic liquid electrolyte, a solid polymer electrolyte, a gel type polymer electrolyte, a solid inorganic electrolyte, a molten inorganic electrolyte or the like which can be used in the production of a lithium secondary battery, but is not limited thereto.

Specifically, the electrolyte solution may include an organic solvent and a lithium salt. As the organic solvent, any solvent can be used without particular limitation as long as it can serve as a medium through which ions involved in the electrochemical reaction of the battery can migrate. The lithium salt may be used without particular limitation as long as it is a compound capable of providing lithium ions used in a lithium secondary battery.

For the purpose of improving the life characteristics of the battery, suppressing a reduction in battery capacity and improving the discharge capacity of the battery, the electrolyte solution may further include, for example, one or more additives such as a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride, in addition to the above electrolyte components. In this case, the additive may be contained in an amount of 0.1% by weight to 5% by weight based on the total weight of the electrolyte solution.

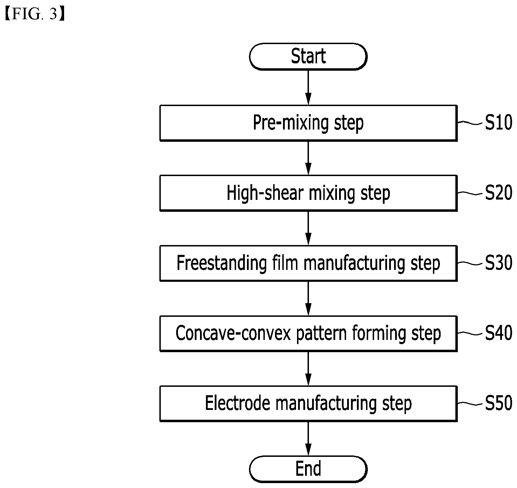

Fig. 3 is a flowchart showing a method for manufacturing an electrode for a secondary battery according to another embodiment of the present disclosure.

Referring to Fig. 3, a method of manufacturing an electrode for secondary battery according to the present embodiment includes a pre-mixing step (S10) of mixing an active material, a conductive material and a binder, a high-shear mixing step (S20) of applying a high shearing force to the mixture mixed in the pre-mixing step, a step (S30) of manufacturing a freestanding film using the high-shear mixed mixture, a step (S40) of forming a pattern on the surface of the freestanding film, and a step (S50) of attaching of a pattern-formed freestanding film on an electrode current collector through a lamination process to manufacture an electrode for a secondary battery.

Here, in the pre-mixing step (S10), the active material, the conductive material, and the binder may be dry-mixed.

Hereinafter, the contents of the present disclosure will be described by way of more specific examples. However, the following examples are for illustrative purposes only, and the scope of the present disclosure is not limited thereto.

### <Example 1>

A pre-mixing step of preparing a mixture in which a positive electrode active material, a conductive material, and a binder were dry-mixed using a blender (available from Waring) was performed. Here, the positive electrode active material was 94 wt% of lithium manganese oxide (LMO), and the conductive material was 3 wt% of Super C65. Further, the binder was 3 wt% of polytetrafluoroethylene (PTFE). At this time, the pre-mixing step (S10) was performed at room temperature at 5000 rpm for 1 minute, and only mixing of the active material, the conductive material, and the binder was induced.

Then, a high-shear mixing step (S20) in which a shearing force was applied to the mixture prepared in the pre-mixing step (S10) to activate polytetrafluoroethylene (PTFE), and prepare an electrode composition was performed using a Bench Kneader PBV-0.1L equipment (available from Irie Shokai). At this time, the high-shear mixing step (S20) was performed at 30 rpm for 5 minutes.

Then, a freestanding film manufacturing step (S30) in which the electrode composition prepared in the high-shear mixing step (S20) was formed into a film having a length of 20 mm and a width of 20 mm to produce a freestanding film was performed using a two-roll mill MR-3 equipment (available from Inoue MFG). In addition, the freestanding film was manufactured so as to have a thickness of 200 *µ*m and a porosity of 30%.

At this time, the following method was used to form a pattern on the freestanding film. The gear ratio of each roll was made different using the two-roll mill equipment to generate a backlash. When the gears were connected to rotate in both directions on one axis of the two roll crushers, the backlash means a gap that occurs when the driving roll rotates but the dependent roll stops, and at this time, as a shearing force is instantaneously generated, a pattern can be formed on the freestanding film. The size of the backlash was adjusted by the above method, so that the pattern was formed to have an interval of 200 *µ*m and a depth of 10 *µ*m.

### <Example 2>

A freestanding film was produced in the same manner as in Example 1, except that in Example 2, the interval of the patterns was formed to be 500 *µ*m.

### <Example 3>

A freestanding film was produced in the same manner as in Example 1, except that in Example 3, the interval of the patterns was formed to be 1700 *µ*m.

### <Example 4>

A freestanding film was produced in the same manner as in Example 2, except that in Example 4, the depth of the pattern was formed to be 2 *µ*m.

### <Example 5>

A freestanding film was produced in the same manner as in Example 2, except that in Example 5, the depth of the pattern was formed to be 30 *µ*m.

### <Comparative Example 1>

A freestanding film was produced in the same manner as in Example 1, except that in Comparative Example 1, a pattern was not formed.

### <Comparative Example 2>

A freestanding film was produced in the same manner as in Example 1, except that in Comparative Example 2, the interval of the patterns was formed to be 70 *µ*m.

### <Comparative Example 3>

A freestanding film was produced in the same manner as in Example 1, except that in Comparative Example 3, the interval of the patterns was formed to be 2500 *µ*m.

### <Comparative Example 4>

A freestanding film was produced in the same manner as in Example 2, except that in Comparative Example 4, the depth of the patterns was formed to be 1 *µ*m.

### <Comparative Example 5>

A freestanding film was produced in the same manner as in Example 2, except that in Comparative Example 5, the depth of the patterns was formed to be 40 *µ*m.

### <Experimental Example 1 (Measurement of Peel Strength)>

For each freestanding film produced in Examples 1 to 5 and Comparative Examples 1 to 5, the double-sided tape was adhered to a slide glass, and then the freestanding film side was adhered to the double-sided tape surface. After that, the slide glass was fixed in a flat state, the end of the electrode current collector was fixed to a jig, and then the electrode current collector was pulled in a direction perpendicular (90 degrees) to the ground on which the slide glass was placed using Instron's UTM equipment. The peel strength between the electrode current collector and the freestanding film was measured at a speed of 300 mm/min to derive an average value, and the results are shown in Table 1 below.

**[Table 1]**

| | Interval (d1,*µ*m) | Depth (H,*µ*m) | Composition | | | Peel strength (gf/20mm) |
|---|---|---|---|---|---|---|
| | | | Positive electrode active material (%) | Conducti ve material (%) | Binder (%) | |
| Example 1 | 200 | 10 | 94 | 3 | 3 | 12.0 |
| Example 2 | 500 | 10 | 94 | 3 | 3 | 11.4 |
| Example 3 | 1700 | 10 | 94 | 3 | 3 | 10.2 |
| Example 4 | 500 | 2 | 94 | 3 | 3 | 11.2 |
| Example 5 | 500 | 30 | 94 | 3 | 3 | 13.0 |
| Comparati ve Example 1 | - | - | 94 | 3 | 3 | 7.5 |
| Comparati ve Example 2 | 70 | 10 | 94 | 3 | 3 | Unmeasurable |
| Comparati ve Example 3 | 2500 | 10 | 94 | 3 | 3 | 8.0 |
| Comparati ve Example 4 | 500 | 1 | 94 | 3 | 3 | 8.2 |
| Comparati ve Example 5 | 500 | 40 | 94 | 3 | 3 | Unmeasurable |

### <Experimental Result Analysis 1 - Pattern Interval>

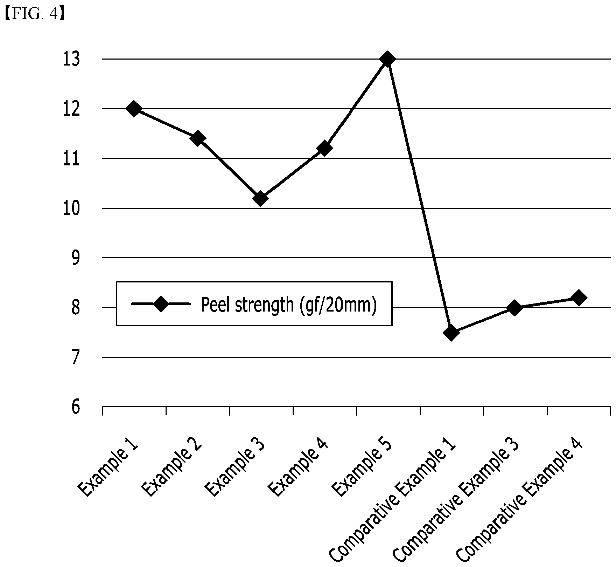

Fig. 4 is a graph for comparing a peel strength according to the pattern formed on the freestanding film included in the electrode for secondary battery, in Example and Comparative Example of the present disclosure.

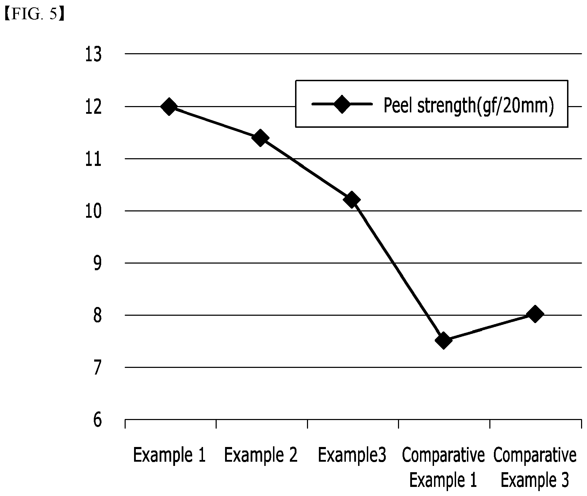

Fig. 5 is a graph for comparing a peel strength according to the interval of the patterns formed on the freestanding film included in the electrode for secondary battery, in Example and Comparative Example of the present disclosure.

At this time, it was confirmed that the peel strength gradually decreased in the order of Example 1, Example 2, Example 3, Comparative Example 3, and Comparative Example 1.

Referring to Fig. 4, it was confirmed that in Comparative Example 2, the measurement is impossible because the electrode is cut due to cracks during the measurement, whereby when the gap between the patterns of the freestanding film is too narrow, the strength of the electrode cannot be maintained. Further, it was confirmed that Comparative Example 3 is substantially the same as the freestanding film in which the pattern is not formed as the interval of the patterns of the standing film is widened, and thus the peel strength is not excellent. That is, when the pattern interval of the freestanding film is too narrow or wide compared to Examples, it was confirmed that the peel strength is not excellent.

Thereby, it was confirmed that when the patten interval of the freestanding film has the same interval as in Examples 1 to 3, the peel strength is excellent.

### <Experimental Result Analysis 2 - Pattern Depth>

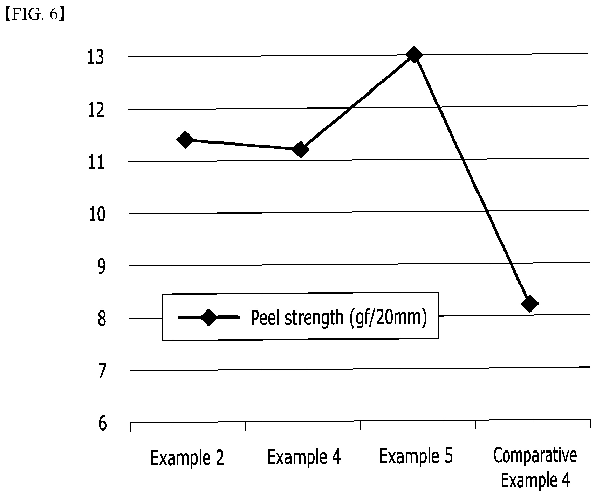

Fig. 6 is a graph for comparing peel strength according to the depth of the patterns formed on the free-standing film included in the electrode for secondary battery, in Example and Comparative Example of the present disclosure.

At this time, it was confirmed that the peel strength gradually decreased in the order of Example 5, Example 2, Example 4, and Comparative Example 4.

Referring to Fig. 5, it was confirmed that in Comparative Example 5, the electrode is cut by a crack during the measurement and thus, the measurement is impossible, whereby when the depth of the pattern of the freestanding film is too deep, the strength of the electrode cannot be maintained. Further, it was confirmed that in Comparative Example 4, as the depth of the pattern of the freestanding film becomes shallow, it is substantially the same as the freestanding film in which the pattern is not formed, and thus the peel strength is not excellent. That is, it was confirmed that the peel strength is not excellent when the depth of the pattern of the freestanding film is excessively high or shallow compared to Examples.

Thereby, it was confirmed that when the depth of the pattern of the freestanding film has the interval range disclosed in Example 2, Example 4 and Example 5, the peel strength is excellent.

Further, it was confirmed from Examples and Comparative Examples that the peel strength of Example 5 is most excellent. Therefore, it was confirmed that when the interval and depth of the pattern has the interval and depth disclosed in Example 5, a freestanding film having most excellent peel strength can be manufactured.

Although the invention has been shown and described above with reference to the preferred embodiments, the scope of the present disclosure is not limited thereto, and numerous other modifications and improvements can be devised by those skilled in the art using the basic principles of the invention defined in the appended claims, which also falls under the spirit and scope of the present disclosure.

## Claims

1. A freestanding film comprising a pattern having directionality on at least one surface.

2. The freestanding film according to claim 1, wherein:
the pattern is a concave-convex pattern.

3. The freestanding film according to claim 1, wherein:
the pattern has an interval of 100 *µ*m to 2000 *µ*m.

4. The freestanding film according to claim 1, wherein:
the pattern has a depth of 1.5 *µ*m to 35 *µ*m.

5. An electrode for secondary battery comprising:
an electrode current collector; and
an electrode layer located on the electrode current collector,
wherein the electrode layer comprises an electrode composition in which an active material, a conductive material, and a binder are dry-mixed,
wherein the electrode composition is prepared into a freestanding film, and
wherein the freestanding film comprises a pattern having directionality on at least one surface.

6. The electrode for secondary battery according to claim 5, wherein:
the pattern is a concave-convex pattern.

7. The electrode for secondary battery according to claim 6, wherein:
the pattern has an interval of 100 *µ*m to 2000 *µ*m.

8. The electrode for secondary battery according to claim 6, wherein:
the pattern has a depth of 1.5 *µ*m to 35 *µ*m.

9. The electrode for secondary battery according to claim 6, wherein:
the freestanding film is attached to the electrode current collector so that one surface on which the pattern is formed is in contact with the electrode current collector.

10. The electrode for secondary battery according to claim 5, wherein:
the active material comprises at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound, Fe₂(MoO₄)₃, and lithium manganese oxide (LMO).

11. The electrode for secondary battery according to claim 5, wherein:
the binder comprises polytetrafluoroethylene (PTFE).

12. The electrode for secondary battery according to claim 5, wherein:
the freestanding film has a peel strength of 10 gf/20 mm or more and 15 gf/20 mm or less.

13. A method of manufacturing an electrode for secondary battery, the method comprising the steps of:
dry-mixing an active material, a conductive material, and a binder to prepare a mixture;
applying a shear force to the mixture to produce a freestanding film;
forming a pattern having directionality at regular intervals on the freestanding film; and
attaching the freestanding film onto an electrode current collector to form an electrode for a secondary battery.

14. The method of manufacturing an electrode for secondary battery according to claim 13, wherein:
the pattern is a concave-convex pattern.

15. The method of manufacturing an electrode for secondary battery according to claim 13, wherein:
the pattern has an interval of 100 *µ*m to 2000 *µ*m.

16. The method of manufacturing an electrode for secondary battery according to claim 13, wherein:
the pattern has a depth of 1.5 *µ*m to 35 *µ*m.

17. The method of manufacturing an electrode for secondary battery according to claim 13, wherein:
the freestanding film is attached to the electrode current collector so that one surface on which the pattern is formed is in contact with the electrode current collector.

18. The method of manufacturing an electrode for secondary battery according to claim 13, wherein:
the step of forming the pattern comprises any of a step of forming the pattern on the freestanding film by an embossing pattern formed on a roll for winding the freestanding film, a step of adjusting the speed of the roll, and a step of setting a gear ratio of the 2 roll mill differently.

19. The method of manufacturing an electrode for secondary battery according to claim 18, wherein:
the step of setting the gear ratio of the two roll mill differently comprises a step of setting the gear ratio differently to generate a backlash.

20. The method of manufacturing an electrode for secondary battery according to claim 13, wherein:
the binder comprises polytetrafluoroethylene (PTFE).

21. A secondary battery comprising the freestanding film of claim 1.
